# Europäisches Patentamt
# European Patent Office
# Office européen des brevets

(19)

(11) Veröffentlichungsnummer: **0 243 569**
**B1**

(12)

# EUROPÄISCHE PATENTSCHRIFT

(45) Veröffentlichungstag der Patentschrift:
**12.10.88**

(51) Int. Cl.⁴: **G 01 N 1/22**

(21) Anmeldenummer: **86890119.0**

(22) Anmeldetag: **29.04.86**

(54) **Verfahren und Vorrichtung zur kontinuierlichen Entnahme einer heissen Gasprobe aus einem Reaktionsraum für eine Gasanalyse.**

(43) Veröffentlichungstag der Anmeldung:
**04.11.87 Patentblatt 87/45**

(45) Bekanntmachung des Hinweises auf die Patenterteilung:
**12.10.88 Patentblatt 88/41**

(84) Benannte Vertragsstaaten:
**AT BE CH DE FR GB IT LI LU NL SE**

(56) Entgegenhaltungen:
**EP-A-0 095 802
US-A-3 748 906
US-A-4 272 481**

(73) Patentinhaber: **VOEST- ALPINE INDUSTRIEANLAGENBAU GESELLSCHAFT M.B.H., Turmstrasse 44, A-4020 Linz (AT)**

(72) Erfinder: **Ramsner, Wolfgang, Hainbuch 216, A-4431 Haidershofen (AT)**
Erfinder: **Ruemer, Karl, Lunzerstrasse 60, A-4032 Linz (AT)**
Erfinder: **Hölzl, Kurt, Wart 35, A-4152 Sarleinsbach (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

**Beschreibung**

Die Erfindung bezieht sich auf ein Verfahren zur kontinuierlichen Entnahme einer heißen Gasprobe aus einem Reaktionsraum für eine Gasanalyse, wobei die Gasprobe einer Analyseneinrichtung abwechselnd über zwei gleiche Entnahmestrecken mit je einer Entnahmesonde und wenigstens einem Filter zugeführt wird, sowie auf eine Vorrichtung zur Durchführung des Verfahrens.

Um einen Prozeß in Abhängigkeit von der Zusammensetzung der beim Prozeßablauf entstehenden Gase zu steuern, werden dem Reaktionsraum Gasproben entnommen und einer Analyseneinrichtung zugeführt. Schwierige Verhältnisse sind dabei mit heissen staubbeladenen Gasen zu erwarten, wie sie beispielsweise bei der Kalzinierung von Rohmehl für die Zementherstellung anfallen. Die für die Entnahme der Gasproben aus dem Reaktionsraum vorgesehenen Entnahmesonden müssen nämlich aufgrund der hohen Gastemperaturen im Reaktionsraum gekühlt werden, was die Gefahr einer Taupunktunterschreitung im Bereich der Entnahmestrecke mit sich bringt, so daß sich durch das Kondensat und die mitgeführten Staubteilchen ein Schlamm bilden kann, der sich in der Entnahmesonde und im Bereich des an die Entnahmesonde angeschlossenen Filters absetzt und die Strömungswege für die Gasprobe verlegt. Es werden folglich periodische Reinigungsarbeiten erforderlich, um die Entnahmestrecke von den Ablagerungen zu befreien und das der Analyseneinrichtung vorgeschaltete Filter zu reinigen. Nachteilig bei diesen Reinigungsarbeiten ist nicht nur der hiefür erforderliche Aufwand, sondern vor allem der Umstand, daß während der Reinigungsarbeiten keine Gasprobe dem Reaktionsraum entnommen werden kann und daher die Prozeßsteuerung für diese Zeit ausgesetzt werden muß. Außerdem ist wegen der für die Gasanalyse erforderlichen, vergleichsweise geringen Gasmenge die Zeit, die die Gasprobe auf ihrem Strömungsweg vom Reaktionsraum bis zur Analyseneinrichtung benötigt, bei den gegebenen Strömungswegen lang, so daß die Prozeßsteuerung erst mit einer entsprechenden Zeitverzögerung Änderungen in der Gaszusammensetzung berücksichtigen kann.

Um bei mehreren Reaktionsräumen mit einer Gasanalyseneinrichtung auszukommen, ist es bekannt (US-A-4 272 481), die an je einen Reaktionsraum angeschlossenen Entnahmesonden nacheinander mit der Gasanalyseneinrichtung zu verbinden, was die Möglichkeit eröffnet, die nicht mit der Analyseneinrichtung verbundenen Entnahmesonden zur Reinigung gegensinnig zur Entnahmerichtung mit Dampf zu durchblasen. Wegen des Vorsehens einer gemeinsamen Gasanalyseneinrichtung für alle Reaktionsräume ist eine kontinuierliche Probenentnahme aus den Reaktionsräumen von vorherein ausgeschlossen.

Damit eine kontinuierliche Probenentnahme aus einem Reaktionsraum sichergestellt werden kann, ist es schließlich bekannt (US-A-3 748 906), zwei parallele Entnahmesonden vorzusehen, wobei während der Probenentnahme durch die eine Sonde die andere Sonde im Gegenstrom durch ein gesondertes Gas gereinigt wird. Nachteilig bei dieser bekannten Probenentnahme ist jedoch, daß ein gesondertes Reinigungsgas zur Verfügung stehen muß und dieses Gas in den Reaktionsraum eingeblasen wird. Außerdem wird bei einer Probenentnahme durch die gerade gereinigte Entnahmesonde das Analysenergebnis durch das noch im Bereich der Entnahmesonde befindliche Reinigungsgas verfälscht.

Der Erfindung liegt somit die Aufgabe zugrunde, diese Mängel zu vermeiden und ein Verfahren zur kontinuierlichen Entnahme einer heißen Gasprobe aus einem Reaktionsraum anzugeben, bei dem kein gesondertes Reinigungsgas erforderlich ist, eine Verfälschung des Analysenergebnisses ausgeschlossen und die Ansprechzeit der Prozeßsteuerung erheblich verkürzt wird.

Die Erfindung löst die gestellte Aufgabe dadurch, daß die Gasprobe den Reaktionsraum jeweils in einer den Analysenbedarf übersteigenden Menge über eine der beiden Entnahmestrecken entnommen wird und daß die Überschußmenge an entnommenem Gas vor der Analyse von der Gasprobe abgezweigt und über die jeweils andere Entnahmestrecke wieder in den Reaktionsraum zurückgeblasen wird.

Durch das Zurückführen einer Überschußmenge an entnommenem Gas durch die jeweils nicht der Probenentnahme dienende Entnahmestrecke wird diese Entnahmestrecke entgegen der Strömungsrichtung für die Probenentnahme durchgeblasen und gereinigt, wobei im Filter zurückgehaltene Staubabscheidungen aus dem Filter gelöst und durch die Entnahmesonde wieder in den Reaktionsraum zurückgeführt werden. Diese Reinigung schließt ein fallweises Durchblasen der Entnahmestrecken mit Druckluft nicht aus. In diesem Falle wird die entnommene Überschußmenge an Probengas nicht in den Reaktionsraum zurückgeführt, sondern abgeblasen. Nach einer gesonderten Reinigung einer der Entnahmestrecken mit Druckluft kann diese Entnahmestrecke zunächst mit der Überschußmenge an Gas aus der anderen Entnahmestrecke gespült werden, um zu verhindern, daß das Analysenergebnis durch die sich sonst im Bereich der ausgeblasenen Entnahmestrecke befindliche Druckluft verfälscht wirc.

Die Entnahme einer den Analysenbedarf übersteigenden Gasmenge bringt darüber hinaus den Vorteil mit sich, daß der Durchmesser der Entnahmesonden vergrößert und damit die Gasströmung innerhalb der Entnahmesonden beruhigt werden kann, so daß sich bereits im Bereich der Gassonden ein erheblicher Staubanteil der Gasproben absetzen kann, was zu einer wesentlich geringeren Belastung der den Entnahmesonden nachgeschalteten Filter führt.

Schließlich kann aufgrund der größeren Gasmenge der entnommenen Gasprobe die Strömungszeit zwischen dem Reaktionsraum und der Analyseneinrichtung wesentlich verkürzt werden, was sich unmittelbar in einem schnelleren Ansprechen der Prozeßsteuerung auf sich ändernde Prozeßverhältnisse auswirkt.

Wird die Überschußmenge in weiterer Ausbildung der Erfindung nach einem Abkühlen der entnommenen Gesamtmenge und einem Abführen des entstehenden Kondensates von der Gasprobe abgezweigt und zurückgeführt, so steht für die Rückspülung der jeweiligen Entnahmestrecke ein trockenes Gas zur Verfügung, das allenfalls im Bereich der Entnahmestrecke während der vorangegangenen Probenentnahme angesammelte Feuchtigkeit absorbiert. Damit wird die Reinigung der Entnahmestrecken zusätzlich unterstützt und die Gefahr eines Anbackens von Staubteilchen verringert.

Zur Durchführung des Verfahrens kann von einer Vorrichtung mit einer Gasanalyseneinrichtung, die über zwei je eine Entnahmesonde und wenigstens ein Filter aufweisende Entnahmestrecken an einen Reaktionsraum anschließbar ist, und mit einer Umschalteinrichtung zum abwechseln den Verbinden der beiden Entnahmestrecken mit einer eine Förderpumpe aufweisenden Speiseleitung für die Analyseneinrichtung ausgegangen werden. Gegenüber herkömmlichen Vorrichtungen dieser Art unterscheidet sich die erfindungsgemäße jedoch dadurch, daß von der Speiseleitung der Analyseneinrichtung auf der Druckseite der Förderpumpe je eine absperrbare Rückleitung über wenigstens ein Überdruckventil zu den Entnahmestrecken abzweigt.

Durch die Umschalteinrichtung können die Entnahmestrecken abwechselnd mit der Analyseneinrichtung verbunden werden, wobei die Gasförderung durch die zwischen der Umschalteinrichtung und der Analyseneinrichtung in der Speiseleitung vorgesehene Förderpumpe sichergestellt wird, und zwar in einer Menge, die den Analysenbedarf übersteigt. Die Oberschußmenge wird über ein Überdruckventil und die an die Speiseleitung angeschlossene Rückleitung in die nicht mit der Analyseneinrichtung verbundene Entnahmestrecke zurückgedrückt, die demzufolge einer Reinigungsspülung durch die Überschußmenge der entnommenen Gasprobe unterworfen wird.

Soll eine der beiden Entnahmestrecken über die Reinigungsspülung durch die Überschußmenge an Probengas hinaus ausgeblasen werden, so darf die Überschußmenge nicht in die zu reinigende Entnahmestrecke zurückgeleitet werden. Zu diesem Zweck kann an die Speiseleitung eine absperrbare Abblasleitung über ein Überdruckventil angeschlossen sein, die unter gleichzeitigem Absperren der zugehörigen Rückleitung geöffnet wird, wenn die zugeordnete Entnahmestrecke mit Druckluft ausgeblasen werden soll.

Da bei heißen Gasproben die Entnahmesonde vor einer unzulässigen Temperaturbelastung durch eine entsprechende Kühlung geschützt werden muß, besteht die Gefahr, daß der Taupunkt der Gasprobe unterschritten wird. Aufgrund der gegenüber bekannten Verfahren größeren Menge an entnommenem Probengas ist diese Gefahr zwar verringert, doch kann sie nur dann mit Sicherheit ausgeschaltet werden, wenn trotz der Kühlung der Entnahmesonden die beiden Entnahmestrecken mittels einer Heizung auf eine Temperatur über dem Taupunkt der Gasprobe erwärmt werden.

Die Abkühlung der abwechselnd durch eine der beiden Entnahmestrecken dem Reaktionsraum entnommenen Gasprobe erfolgt dann in vorteilhafter Weise in einem Kühler in der Speiseleitung auf der Saugseite der Förderpumpe, so daß nur ein Kühler mit einer Kondensatabführung für beide Entnahmestrecken vorgesehen werden muß.

An Hand der Zeichnung wird das erfindungsgemäße Verfahren näher erläutert. Es zeigen

Fig. 1 eine erfindungsgemäße Vorrichtung zur kontinuierlichen Entnahme einer heißen Gasprobe aus einem Reaktionsraum in einem schematischen Blockschaltbild und

Fig. 2 eine der beiden Entnahmesonden dieser Vorrichtung in einem Axialschnitt in einem größeren Maßstab.

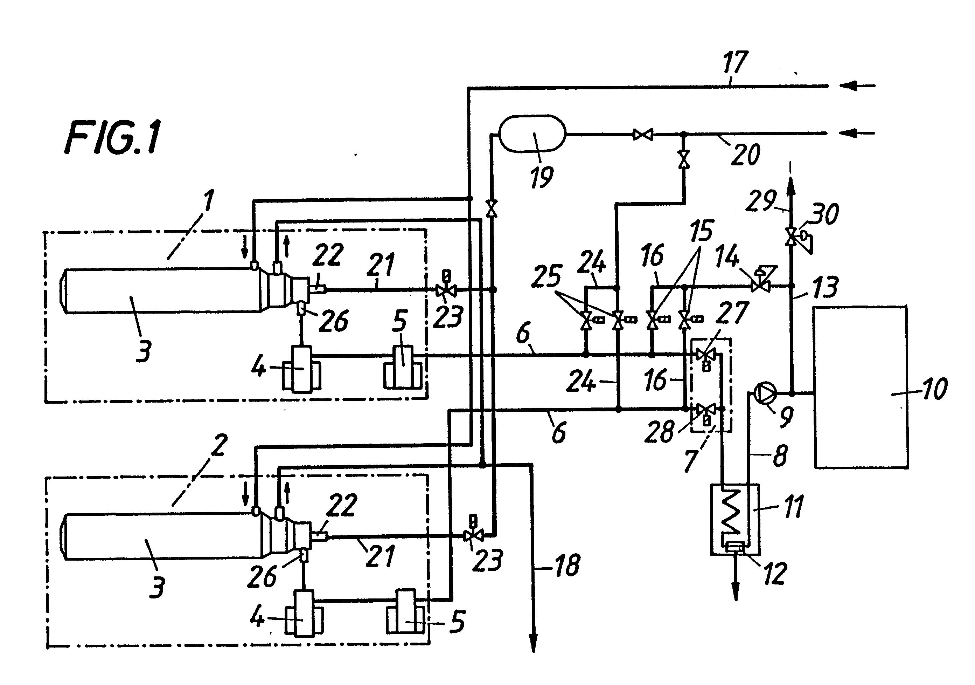

Zum Abziehen einer Gasprobe aus einem nicht dargestellten Reaktionsraum sind gemäß Fig. 1 zwei gleich aufgebaute Entnahmestrecken 1 und 2 vorgesehen, die jeweils aus einer Entnahmesonde 3 und zwei dieser Entnahmesonde 3 nachgeschalteten Filtern, nämlich einem Grobfilter 4 und einem Feinfilter 5, bestehen. Diese Entnahmestrecken 1 und 2 sind mit Hilfe je einer Gasleitung 6 über eine Umschalteinrichtung 7 an eine Speiseleitung 8 angeschlossen, die mit einer Förderpumpe 9 versehen ist und die Gasprobe einer Analyseneinrichtung 10 zufördert. Auf der Saugseite der Förderpumpe 9 ist in der Speiseleitung 8 ein Kühler 11 mit einer Kondensatabführung 12 vorgesehen. Auf der Druckseite der Förderpumpe 9 zweigt von der Speiseleitung 8 eine Anschlußleitung 13 mit einem Überdruckventil 14 ab, die sich in zwei durch je ein Ventil 15 absperrbare Rückleitungen 16 zu den beiden Gasleitungen 6 verzweigt.

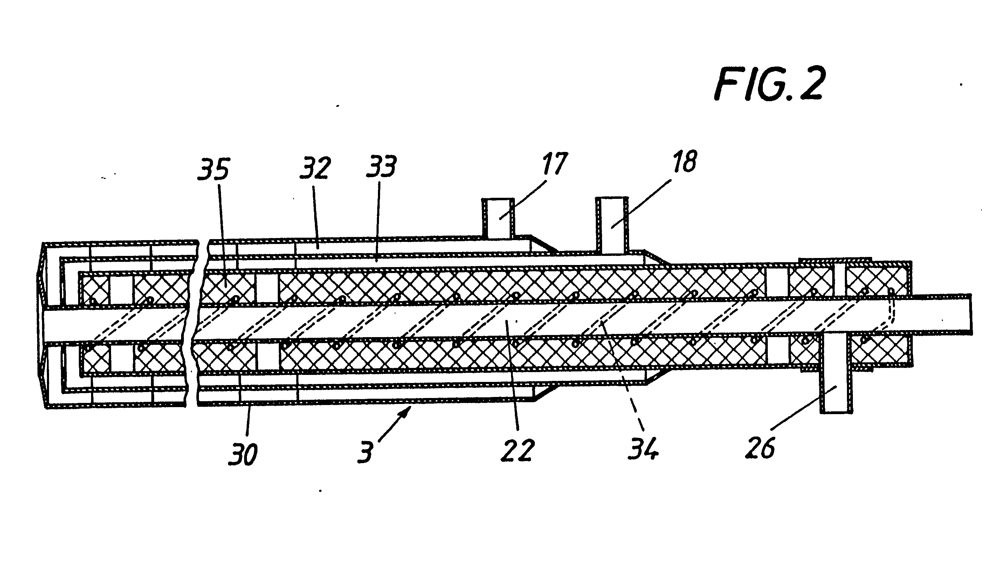

Zur Kühlung der Entnahmesonden 3 ist eine Kühlflüssigkeitszuleitung 17 und eine Kühlflüssigkeitsableitung 18 vorgesehen. Außerdem können die Entnahmesonden 3 mit Hilfe von Druckluft entgegen der Strömungsrichtung für die Probenentnahme durchblasen werden. Zu diesem Zweck ist ein Druckluftspeicher 19 vorgesehen, der über eine Druckluftleitung 20 von einer nicht dargestellten Druckluftquelle beaufschlagt werden kann. Dieser Druckluftspeicher ist über Blasleitungen 21 mit dem gasführenden Innenrohr 22 verbunden, wobei die Blasleitungen 21 über Ventile 23 freigegeben werden können. Wie der Fig. 2 entnommen werden kann, ist die Anordnung dabei so getroffen, daß die Blasluft koaxial in das Innenrohr 22 der Entnahmesonden 3 strömt und folglich eine vorteilhafte Reinigungswirkung mit sich bringt. Zum Ausblasen der Filter 4 und 5 ist die Druckluftleitung 20 über Verbindungsleitungen 24 mit je einem Absperrventil 25 an die Gasleitungen 6 angeschlossen. Wird eines der Absperrventile 25 geöffnet, so wird die Druckluft entgegen der Strömungsrichtung des dem Reaktionsraum entnommenen Gases zunächst durch das Feinfilter 5 und dann durch das Grobfilter 4 gedrückt, bevor sie durch die Austrittsleitung 26 der Entnahmesonde 3 in das Innenrohr 22 und durch das Innenrohr in den Reaktionsraum strömt.

Die Gasprobe wird abwechselnd über eine der beiden Entnahmestrecken 1 und 2 dem Reaktionsraum entnommen und über die Umschalteinrichtung 7 der Analyseneinrichtung 10 zugeführt. Wird die Gasprobe beispielsweise über die Entnahmestrecke 1 abgezogen, so wird die Gasleitung 6 dieser Entnahmestrecke über die Umschalteinrichtung 7 an die Speiseleitung 8 angeschlossen, indem das Ventil 27 der Umschalteinrichtung 7 geöffnet und das Ventil 28 in der Gasleitung 6 der Entnahmestrecke 2 geschlossen wird. Die Gasprobe gelangt somit zum Kühler 11, in dem das entstehende Kondensat abgeführt wird, so daß die nunmehr trockene Gasprobe der Analyseneinrichtung 10 zugeführt werden kann. Da dem Reaktionsraum eine den Analysenbedarf übersteigende Gasmenge entnommen wurde, wird die Überschußmenge in die Gasleitung 6 der Entnahmestrecke 2 zurückgeführt, und zwar über das in der Anschlußleitung 13 angeordnete Überdruckventil 14 und die eine der beiden Rückleitungen 16. Die in die Gasleitung 6 der Entnahmestrecke 2 führende Rückleitung 16 ist zu diesem Zweck über das Absperrventil 15 geöffnet, während die Rückleitung 16 zur Gasleitung 6 der Entnahmestrecke 1 mit Hilfe des Ventiles 15 abgesperrt wird. Die für die Gasanalyse nicht benötigte Überschußmenge wird somit entgegen der Strömungsrichtung für die Probenentnahme zunächst über das Feinfilter 5 und dann über das Grobfilter 4 in die Sonde 3 der Entnahmestrecke 2 gedrückt, von wo sie in den Reaktionsraum gelangt. Diese Rückspülung der Entnahmestrecke 2 bewirkt deren Reinigung von den abgesetzten bzw. zurückgehaltenen Feststoffteilchen, so daß nach einem Umschalten der Umschalteinrichtung 7 und der Ventile 15 in den Rückleitungen 16 eine Gasprobe durch die gereinigte Entnahmestrecke 2 abgezogen werden kann, während nunmehr die Entnahmestrecke 1 einer Reinigungsspülung mit der Gasüberschußmenge unterworfen wird.

Soll trotz dieser Reinigungsspülungen eine der beiden Entnahmestrecken mit Hilfe von Druckluft ausgeblasen werden, so braucht für dieses Ausblasen die kontinuierliche Probenentnahme nicht unterbrochen zu werden, weil ja die Probenentnahme durch die jeweils andere Entnahmestrecke weitergeführt werden kann. Zum Ausblasen beispielsweise der Entnahmestrecke 1 wird zunächst das Absperrventil 15 in der Rückleitung 16 zur Gasleitung 6 der Entnahmestrecke 1 geschlossen und die an die Speiseleitung 8 angeschlossene Abblasleitung 29, die ein Überdruckventil 30 enthält, geöffnet, so daß die überschüssige Gasmenge ins Freie abgeblasen werden kann. Danach wird das Ventil 25 in der Verbindungsleitung 24 zwischen der Druckluftleitung 20 und der Gasleitung 6 der Entnahmestrecke 1 geöffnet, um die Filter 5 und 4 ausblasen zu können. Erst nach einer entsprechenden Durchblaszeit wird das Ventil 23 in der Blasleitung 21 der Entnahmestrecke 1 geöffnet und das Innenrohr 22 der Entnahmesonde 3 durchgeblasen, damit nicht durch die Druckluft aus der Leitung 21 das Ablösen der ausgefilterten Staubteilchen aus den Filtern 4 und 5 beeinträchtigt werden kann. Der Druck der Blasluft aus der Blasleitung 21 wirkt ja dem Blasluftstrom aus der Gasleitung 6 entgegen. Nach der Reinigung der Entnahmestrecke 1 wird die Abblasleitung 29 nach einem Schließen der Ventile 23 und 25 und einem Öffnen des Ventiles 15 geschlossen, um die in den Leitungen, den Filtern 4 und 5 und der Entnahmesonde 3 befindliche Druckluft in den Reaktionsraum mit Hilfe der Überschußmenge an Probengas ausspülen zu können, so daß bei einer Umschaltung auf eine Probenentnahme über die Entnahmestrecke 1 das Analysenergebnis nicht durch einen Druckluftanteil verfälscht werden kann. Zum Ausblasen der Entnahmestrecke 2 wird in analoger Weise vorgegangen.

Da die Gasprobe einem heißen Reaktionsraum entnommen werden muß, müssen die Entnahmesonden durch eine Kühlung vor einer unzulässigen Temperaturbelastung geschützt werden. Zu diesem Zweck ist das Innenrohr 22 mit einem zweiteiligen Kühlmantel 31 umgeben, durch dessen äußeren Ringspalt 32 die Kühlflüssigkeit, im allgemeinen Wasser, zugeführt wird, um nach einer Umlenkung durch einen inneren Ringspalt 33 im Gegenstrom abgezogen zu werden. Eine solche Kühlung des Mantels 31 der Entnahmesonde 3 birgt allerdings die Gefahr einer Taupunktunterschreitung in sich. Zur Vermeidung einer Taupunktunterschreitung wird das Innenrohr 22 über eine elektrische Widerstandsheizung 34 auf eine über dem Taupunkt der Gasprobe liegende Temperatur erwärmt, wobei das Innenrohr 22 gegenüber dem gekühlten Mantel 31 durch eine Wärmeisolierung 35 abgeschirmt ist. Durch diese besondere Maßnahme braucht nicht auf einen besonderen Temperaturverlauf bei der Mantelkühlung geachtet zu werden, weil auch bei einer Unterschreitung der Taupunkttemperatur im Bereich der Kühlflüssigkeit aufgrund der Heizung des Innenrohres 3 keine Kondensierung im Innenrohr 22 zu befürchten ist.

**Patentansprüche**

1. Verfahren zur kontinuierlichen Entnahme einer heißen Gasprobe aus einem Reaktionsraum für eine Gasanalyse, wobei die Gasprobe einer Analyseneinrichtung (10) abwechselnd über zwei gleiche Entnahmestrecken (1, 2) mit je einer Entnahmesonde (3) und wenigstens einem Filter (4, 5) zugeführt wird, dadurch gekennzeichnet, daß die Gasprobe den Reaktionsraum jeweils in einer den Analysenbedarf über steigenden Menge über eine der beiden Entnahmestrecken (1, 2) entnommen wird und daß die Überschußmenge an entnommenem Gas vor der Analyse von der Gasprobe abgezweigt und über die jeweils andere Entnahmestrecke (2, 1) wieder in den Reaktionsraum zurückgeblasen wird.

2. Verfahren nach Anspruch 1, dadurch gekennzeichnet, daß die Überschußmenge nach einem Abkühlen der entnommenen Gesamtmenge und einem Abführen des entstehenden Kondensates von der Gasprobe abgezweigt und zurückgeführt wird.

3. Vorrichtung zur Durchführung des Verfahrens nach Anspruch 1 oder 2 mit einer Gasanalyseneinrichtung (10), die über zwei je eine Entnahmesonde (3) und wenigstens ein Filter (4, 5) aufweisende Entnahmestrecken (1, 2) an einem Reaktionsraum anschließbar ist und mit einer Umschalteinrichtung (7) zum abwechseln den Verbinden der beiden Entnahmestrecken (1, 2) mit einer eine Förderpumpe (9) aufweisenden Speiseleitung (8) für die Analyseneinrichtung (10), dadurch gekennzeichnet, daß von der Speiseleitung (8) der Analyseneinrichtung (10) auf der Druckseite der Förderpumpe (9) je eine absperrbare Rückleitung (16) über wenigstens ein Überdruckventil (14) zu den Entnahmestrecken (1, 2) abzweigt.

4. Vorrichtung nach Anspruch 3, dadurch gekennzeichnet, daß auf der Druckseite der Förderpumpe (9) an die Speiseleitung (8) eine Abblasleitung (29) über ein Überdruckventil (30) angeschlossen ist.

5. Vorrichtung nach Anspruch 3 oder 4, dadurch gekennzeichnet, daß die beiden Entnahmestrecken (1, 2) mittels einer Heizung auf eine Temperatur über dem Taupunkt der Gasprobe erwärmbar sind.

6. Vorrichtung nach einem der Ansprüche 3 bis 5, dadurch gekennzeichnet, daß auf der Saugseite der Förderpumpe (9) in die Speiseleitung (8) ein Kühler (11) mit einer Kondensatabführung (12) eingeschaltet ist.

**Claims**

1. A process of continuously withdrawing a hot gas sample from a reaction space for an analysis of the gas, wherein the gas sample is fed to an analyzer (10) in alternation via two withdrawing lines (1, 2) of the same design, each of which is provided with a withdrawing probe (3) and with at least one filter (4, 5), characterized in that the gas sample is withdrawn from the reaction space through either of the two withdrawing lines (1, 2) in excess of the quantity required for the analysis, and the surplus quantity of gas which has been withdrawn is diverted from the gas sample before the analysis and is blown back into the reaction space through the other withdrawing line (2, 1).

2. A process according to claim 1, characterized in that the surplus quantity is diverted and returned when the entire quantity which has been withdrawn has been cooled and the resulting condensate has been removed from the gas sample.

3. An apparatus for carrying out the process according to claim 1 or 2, comprising a gas analyzer (10), which is adapted to be connected to a reaction space by two withdrawing lines (1, 2), each of which comprises a withdrawing probe (3) and at least one filter (4, 5), and change-over means (7) for connecting the two withdrawing lines (1, 2) in alternation to a supply line (8) for the analyzer (10), which supply line comprises a feed pump (9), characterized in that each of the withdrawing lines (1, 2) is connected to 3 return line (16), which is adapted to be shut off and branches by way of at least one pressure relief valve (14) from the supply line (8) for the analyzer (10) on the discharge side of the feed pump (9).

4. An apparatus according to claim 3, characterized in that a blow-off line (29) is connected by a pressure relief valve (30) to the supply line (8) on the discharge side of the feed pump (9).

5. An apparatus according to claim 3 or 4, characterized in that the two withdrawing lines (1, 2) are adapted to be heated by a heater to a temperature above the dew point temperature of the gas sample.

6. An apparatus according to any of claims 3 to 5, characterized in that a cooler (11) comprising a condensate outlet (12) is incorporated in the supply line (8) on the suction side of the feed pump (9).

**Revendications**

1. Procédé de prélèvement en continu d'un échantillon de gaz chaud à partir d'une chambre de réaction pour une analyse de gaz, l'échantillon de gaz étant alternativement conduit, par l'intermédiaire de deux circuits de prélèvement identiques comportant chacun une sonde (3) de prélèvement et au moins un filtre (4, 5), à un dispositif (10) d'analyse,

caractérisé par le fait que l'échantillon de gaz est prélevé de la chambre de réaction suivant les cas dans une quantité supérieure à celle nécessaire à l'analyse, par l'intermédiaire de l'un des circuits (1, 2) de prélèvement, et que la quantité excédentaire de gaz prélevé est dérivée avant l'analyse de l'échantillon de gaz et réinsufflée dans la chambre de réaction par l'intermédiaire de l'autre circuit (2, 1) de prélèvement.

2. Procédé selon la revendication 1, caractérisé par le fait que la quantité excédentaire, après un refroidissement de la quantité totale prélevée et une évacuation du condensat qui se forme, est dérivée de l'échantillon de gaz et est recyclée.

3. Dispositif pour la mise en oeuvre du procédé selon la revendication 1 ou 2, comportant un dispositif (10) d'analyse de gaz, qui peut être raccordé, par l'intermédiaire de deux circuits (1, 2) de prélèvement présentant chacun une sonde (3) de prélèvement et au moins un filtre (4, 5), à une chambre de réaction, et comportant également un dispositif (7) de commutation pour relier alternativement les deux circuits (1, 2) de prélèvement avec une confuite (8) d'alimentation du dispositif (10) d'analyse, présentant une pompe (9) de circulation,

caractérisé par le fait qu'une conduite (16) de retour obturable pour chaque conduite d'alimentation est dérivée de la conduite (8) d'alimentation (10) du dispositif d'analyse, du côté de refoulement de la pompe (9) de circulation, par l'intermédiaire d'au moins une soupape (14) de surpression, vers les circuits (1, 2) de prélèvement.

4. Dispositif selon la revendication 3, caractérisé par le fait que, du côté de refoulement de la pompe (9) de circulation, une conduite (29) de decharge est raccordée à la conduite (8) d'alimentation par l'intermédiaire d'une soupape (30) de surpression.

5. Dispositif selon la revendication 3 ou 4, caractérisé par le fait que les deux circuits (1, 2) de prélèvement peuvent être chauffés au moyen d'un dispositif de chauffage à une température située au-dessus du point de rosée de l'échantillon de gaz.

6. Dispositif selon l'une des revendications 3 à 5, caractérisé par le fait que, du côté aspiration de la pompe (9) de circulation dans la conduite (8) d'alimentation, un réfrigérant (11) est connecté à un dispositif (12) d'évacuation du condensat.

FIG.1

FIG.2

35   32   33          17        18

30   3    22   34     26

0 243 569

3